# EUROPEAN PATENT APPLICATION

(11) **EP 0 747 244 A1**
(43) Date of publication of application: **11.12.1996**
(21) Application number: 96201539.2
(22) Date of filing: 03.06.1996
(51) Int. Cl.: B60D 1/52, B60D 1/64, B60D 1/36

(54) **A coupling device suitable for coupling a vehicle and a trailer to be moved by said vehicle, as well as a vehicle part and a trailer part suitable for such a coupling device**

(30) Priority: 07.06.1995 NL 1000504
(71) Applicant: NETHERLANDS CAR B.V., 6121 RD Born (NL)
(72) Inventor: Heijnen, Hendrikus Petrus, 5632 LB Eindhoven (NL)
(74) Representative: Veldman-Dijkers, Cornelia G.C., Ir.

(57) **Abstract**

A coupling device (1) suitable for coupling a vehicle and a trailer to be moved by the vehicle. The coupling device is provided with a vehicle part (3) to be secured to the vehicle, and with a trailer part (5) to be secured to the trailer, whereby the trailer part (5) can be detachably coupled to the vehicle part (3). The vehicle part comprises a tubular housing (9) bounding a recess (11), whilst the trailer part comprises a coupling part (17), which can be partially slid into said recess and which can be locked with respect to said tubular housing (5), whereby said tubular housing and said coupling part are provided with electric contacts, which can be electrically connected by means of the coupling part which can be slid into said housing.

## Description

A coupling device suitable for coupling a vehicle and a trailer to be moved by said vehicle, as well as a vehicle part and a trailer part suitable for such a coupling device.

The invention relates to a coupling device suitable for coupling a vehicle and a trailer to be moved by said vehicle, which coupling device is provided with a vehicle part to be secured to said vehicle, and with a trailer part to be secured to said trailer, whereby said trailer part can be detachably coupled to said vehicle part.

The invention also relates to a vehicle part and to a trailer part suitable for such a coupling device.

The term "trailer" used herein is understood to mean a loading platform supported by wheels, a caravan, a collapsible caravan, a bicycle carrier, a luggage container or another construction which is coupled to a vehicle and which functions to extend the transport capacity of the vehicle.

The vehicle part of a coupling device known per se is provided with a towbar comprising a ball, and the trailer part is provided with a cup-shaped cap, also called the coupling head, which engages around said ball. A drawback of such a coupling device is that people frequently bump into the towbar protruding from the vehicle and soil their clothes in the uncoupled position of the coupling device. Furthermore the towbar defaces the rear side of the vehicle, and in the case of a relatively minor collision the towbar rather than a bumper of the vehicle will absorb the impact. This is undesirable in connection with possible damage to the supporting frame parts.

A partial solution for this problem is provided by a so-called detachable towbar. The towbar may be removed from the vehicle after use. A drawback of a detachable towbar is the fact that detaching is laborious, as a result of which the towbar is frequently left in place in practice. In addition to that the presence of dirt and grease on the detached towbar make it undesirable to put the towbar in the vehicle.

Detachable towbars of this type are known, inter alia from European Patent Applications EP-A1-0 533 270 and EP-A2-0 455 251. With the coupling devices described therein a part fixed to the vehicle, a detachable towbar and a part fixed to the trailer are needed in order to couple the vehicle and the trailer, however, which makes the coupling device relatively complicated. With all the above-described coupling devices it is necessary to realize a separate electric connection between vehicle and trailer after the two have been mechanically coupled. Generally this is done by connecting an electric lead, which is connected to the trailer, to a coupler socket on the vehicle by means of a plug. The lead hangs loose in the uncoupled position of the trailer, with the risk of the plug being damaged or becoming fouled. Another drawback of the electric connection, which is known per se, is that the connection must be effected independently of the mechanical connection.

The object of the invention is to provide a coupling device wherein the presence of projecting parts on the vehicle and of loose parts is avoided, whilst a mechanical and electric coupling between the vehicle and the container is obtained in a simple manner.

This objective is accomplished with a coupling device according to the invention in that the vehicle part comprises a tubular housing bounding a recess, whilst the trailer part comprises a coupling part, which can be partially slid into said recess and which can be locked with respect to said tubular housing, whereby said tubular housing and said coupling part are provided with electric contacts, which can be electrically connected by means of the coupling part which can be slid into said housing.

In this manner the vehicle no longer comprises any projecting parts and the trailer can be coupled to the vehicle in a simple manner by sliding the coupling part into a tubular housing and locking it therein. There will be no loose parts after the trailer is uncoupled from the vehicle.

Furthermore an electric contact is effected simultaneously with the mechanical coupling. This in contrast to the known towbar, wherein a separate connection is provided for the electric contact, which, just like the towbar, defaces the appearance of the vehicle.

One embodiment of the coupling device according to the invention is characterized in that the trailer part comprises an attaching part which is pivoted to said coupling part, which attaching part can be attached to a trailer.

In this manner the trailer and the attaching part attached thereto are capable of pivoting movement with respect to the vehicle and with respect to the coupling part coupled to said vehicle. The pivoting function is provided on the trailer.

It is noted that from US Patent US-A-5.185.839 a coupling device is known, which is provided with a vehicle part fixed to the vehicle and with a trailer part fixed to the trailer. A method for interlocking the two parts in a simple manner cannot be derived from the said patent application, however.

Another embodiment of a coupling device according to the invention is characterized in that said coupling part and said attaching part are pivotally interconnected by means of a ball, which is secured to one part, and a ring engaging around said ball, which is secured to another part.

Said ball and said ring engaging around said ball form a relatively simple, reliable hinge between the coupling part and the attaching part. Said ball and said ring cannot be detached from each other other than for maintenance purposes.

Another embodiment of the coupling device is characterized in that the coupling part is connected to the attaching part by means of at least one viscous damper.

The viscous damper slows down relatively quick pivoting movements of the attaching part with respect to the coupling part, whilst relatively slow pivoting movements can take place without impediment.

The invention will be explained in more detail with reference to the drawing, wherein:
Figure 1 is a perspective view of a coupling device according to the invention;
Figures 2A, 2B and 2C show various positions during the coupling and uncoupling of the coupling device shown in Figure 1;
Figure 3 is a plan view of the position of the coupling device shown in Figure 2B;
Figure 4 shows two slides and one locking pin of the coupling device shown in Figure 1;
Figure 5 shows a vehicle part of the coupling device shown in Figure 1; and
Figure 6 shows another vehicle part according to the invention.

Like parts are numbered alike in the Figures.

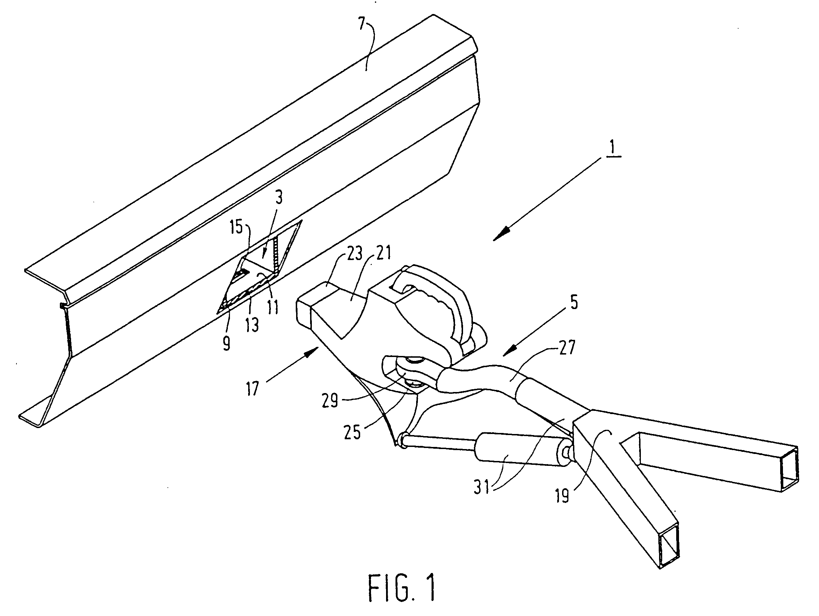

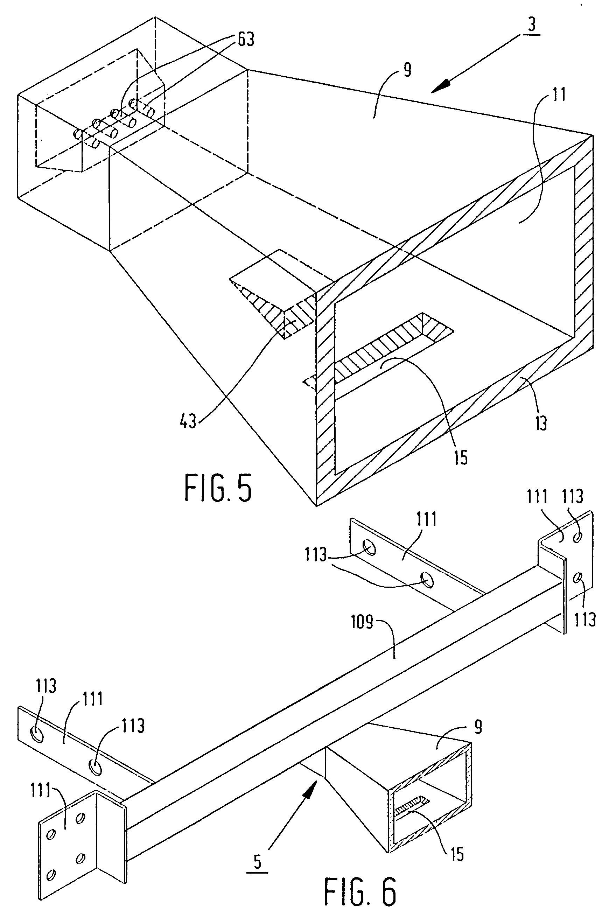

Figure 1 is a perspective view of a coupling device according to the invention. The coupling device 1 is provided with a vehicle part 3 and a trailer part 5. The vehicle part 3 is attached to a vehicle, a rear bumper 7 of which is shown in the Figure. Vehicle part 3 comprises a tubular housing 9, which bounds a funnel-shaped recess 11 and which is provided with a slot 15 formed in a wall 13 thereof. Tubular housing 9 is fully recessed in rear bumper 7 and can be hidden from view by means of a covering cap (not shown). Figure 5 is a larger-scale perspective view of vehicle part 3. Trailer part 5 comprises a coupling part 17 and an attaching part 19 which is pivoted to said coupling part 17, which attaching part is attached to a caravan (not shown), for example. Coupling part 17 comprises a guide 21 shaped to be complementary to funnel-shaped recess 11, as well as a rectangular plug 23 extending from said guide. Coupling part 17 furthermore comprises a ball 25, around which a ring 29 engages, which ring is connected to said attaching part via a rod 27. Coupling part 17 and attaching part 19 are capable of pivoting movement with respect to each other via ball 25 and ring 29. Ball 25 and ring 29 are undetachably interconnected. The two parts 17 and 19 of trailer part 5 are also interconnected by means of two viscous dampers 31.

When the trailer and the vehicle are being coupled together, guide 21 of coupling part 17 is slid into the funnel-shaped recess 11 of tubular housing 9. Due to the funnel shape it is relatively simple to insert guide 21 into recess 11.

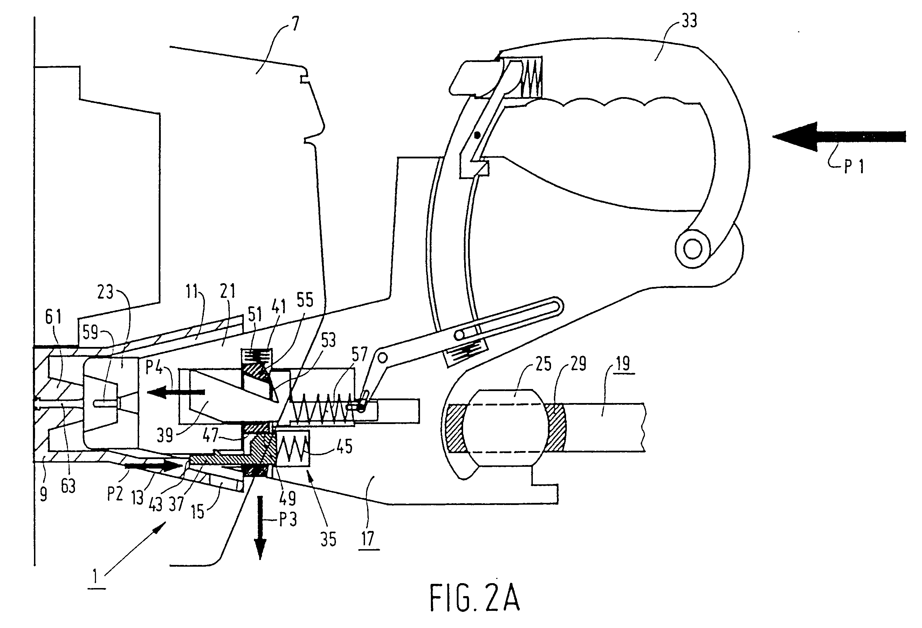

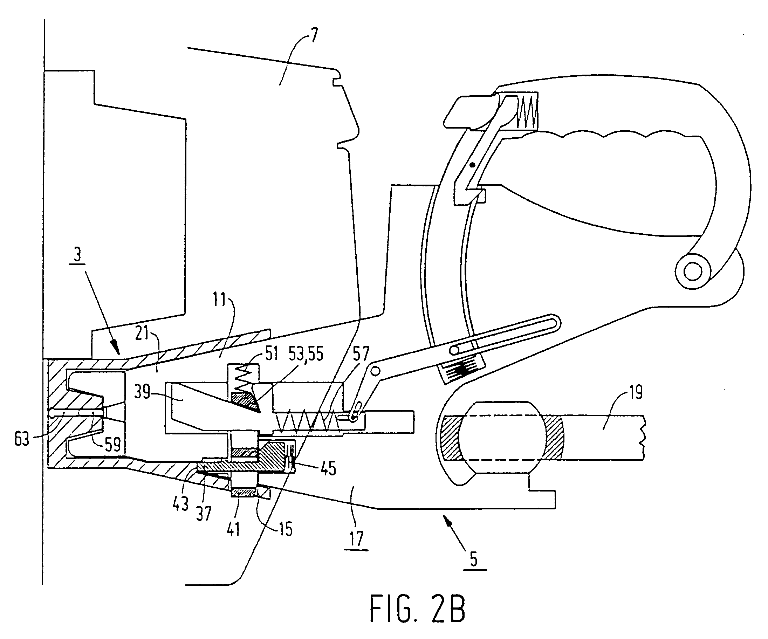

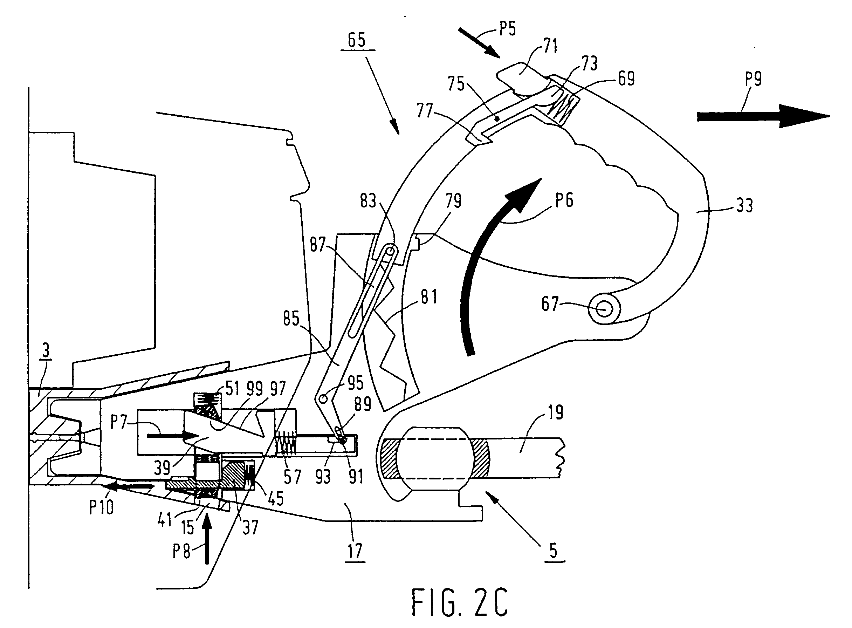

The operation of coupling device 1 will be explained in more detail with reference to Figures 2A, 2B and 2C. Said Figures 2A, 2B and 2C illustrate the coupling, the coupled position and the uncoupling respectively.

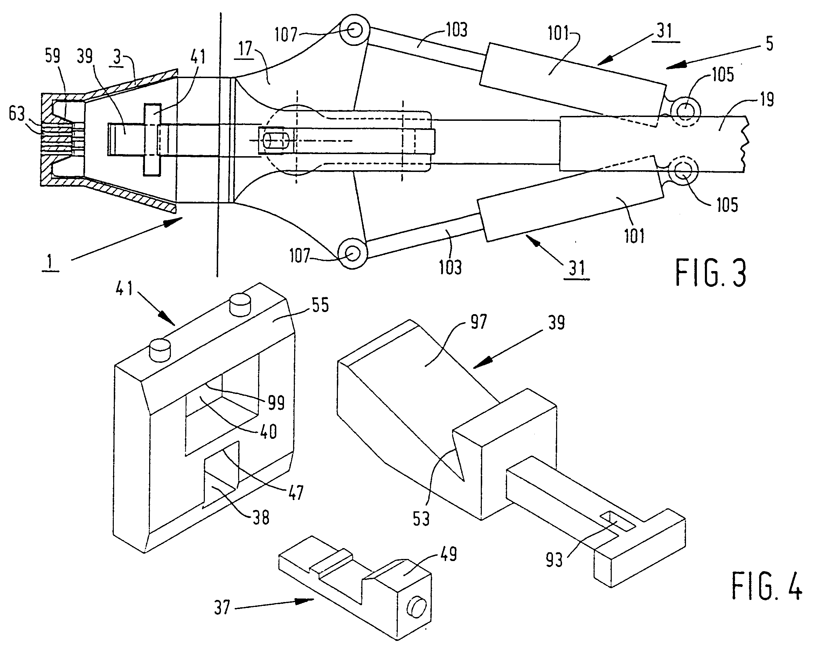

In the position of coupling device 1 shown in Figure 2A guide 21 is largely positioned within recess 11. The coupling device 1 and the trailer attached to coupling device 1 are moved in a direction indicated by arrow P1 by means of a grip 33 secured to coupling part 17, as a result of which a locking mechanism 35 is activated. Locking mechanism 35 comprises an unlocking slide 37, an operating slide 39, which is capable of movement parallel to unlocking slide 37, and a locking pin 41 which is capable of movement transversely thereto. Unlocking slide 37, operating slide 39 and locking pin 41 are shown in more detail in Figure 4. Slides 37 and 39 are supported in recesses 38, 40 of locking pin 41. By moving coupling device 1 further in the direction indicated by arrow P1, one end of unlocking pin 37 comes into contact with a stop 43 positioned within housing 9, and is then moved in a direction indicated by arrow P2 against the spring force of a spring 45. Locking pin 41 butts with a surface 47 against a surface 49 of unlocking slide 37 under the spring force of a spring 51. Surface 49 is slid under surface 47 by moving unlocking slide 37, as a result of which locking pin 41 is moved in a direction indicated by arrow P3, into slot 15 of housing 9, by a spring force exerted by spring 51, as a result of which coupling part 17 is mechanically connected to housing 9. Operating slide 39 butts with a sloping surface 53 against a corresponding sloping surface 55 of locking pin 41. By moving locking pin 41 in the direction indicated by arrow P3 the operating slide 39 will be moved in a direction indicated by arrow P4 by a spring force exerted by a spring 57, as a result of which locking pin 41 is locked against movement in a direction opposed to the direction indicated by arrow P3. The electric connection is effected simultaneously with trailer part 5 being mechanically coupled to vehicle part 3. By moving coupling part 17 in the direction indicated by arrow P1, the plug 23, which is provided with electric terminal pins 59, is inserted into a coupler socket 61, which is provided with openings 63 for receiving said terminal pins. Electric terminal pins 59 are connected, in a manner not shown, to an electric system of the trailer.

Figure 2B shows the mechanical and the electric coupling of vehicle part 3 to trailer part 5. The sloping surfaces 53, 55 prevent locking pin 41 from slipping out of slot 15.

Figure 2C shows the uncoupling of coupling device 1. To this end an unlocking mechanism 65 is activated, which inter alia comprises the grip 33, which is capable of pivoting movement about a pivot 67 of coupling part 17. Unlocking mechanism 65 is activated by moving a knob 71 provided in grip 33 in a direction indicated by arrow P5 against a spring force exerted by a spring 69, as a result of which a lever 73 is pivoted about a pivot 75 and a catch 77 provided on lever 73, by means of which grip 33 is locked with respect to coupling part 17, is released from a notch 79 in coupling part 17. After catch 77 has been released from notch 79, grip 33 is pivoted about pivot 67 in a direction indicated by arrow P6 against a spring force exerted by a spring 81. One end of a second lever 85 is movably mounted on grip 33 via a pin 83. The end of the second lever 85 is provided with a slot 87, in which pin 83 is supported. Another end of lever 85 is provided with a slot 89, in which a pin 91 is supported, which also engages in a groove 93 formed in operating slide 39. Lever 85 is capable of tilting movement about a pivot 95. Lever 85 is tilted about pivot 95 by moving grip 33 in the direction indicated by arrow P6, as a result of which operating slide 39 is moved in a direction indicated by arrow P7 against a spring force exerted by spring 57. A sloping surface 97 of operating slide 39 thereby comes into contact with a sloping surface 99 of locking pin 41, as a result of which locking pin 41 is moved in a direction indicated by arrow P8 against a spring force indicated by spring 51, and is moved out of slot 15 of vehicle part 3.

Then trailer part 5 is moved in a direction indicated by arrow P9, as a result of which trailer part 5 is uncoupled from vehicle part 3. Unlocking slide 37 is moved in a direction indicated by arrow P10 against the spring force exerted by spring 45, and surface 49 is moved under surface 47 of locking pin 41, as a result of which locking pin 41 is locked in position.

Figure 3 is a plan view of the coupled position of coupling device 1 shown in Figure 2. Dampers 31 each comprise a cylinder 101 and a piston 103, which is capable of movement within cylinder 101. Cylinders 101 are pivoted, via pivots 105, to attaching part 19 with their ends facing away from pistons 103. Pistons 103 are pivoted, via pivots 107, to coupling part 17 with their ends facing away from cylinders 101. Viscous dampers 31 prevent attaching part 19 from making relatively quick pivoting movements with respect to coupling part 17. Relatively slow movements are possible, however.

Figure 6 shows an embodiment of a vehicle part 5 provided with a tubular housing 9, which is secured to a tubular section 109. Vehicle part 3 is secured to a vehicle by means of bolts inserted through holes 113 and flanges 111 extending parallel to and transversely to tubular section 109.

The coupling device 1 may be made of plastic material or of a metal, for example.

It is also possible to fit the coupling part of the trailer part with a bicycle rack or a luggage container. In that case the trailer part does not comprise an attaching part which is pivoted to the coupling part.

The proposed coupling device comprising a pivoted attaching part makes it possible to place the pivoting point of the trailer with respect to the vehicle closer to the vehicle than with a known towbar, which results in an improved road-holding of the vehicle and trailer.

## Claims

1. A coupling device suitable for coupling a vehicle and a trailer to be moved by said vehicle, which coupling device is provided with a vehicle part to be secured to said vehicle, and with a trailer part to be secured to said trailer, whereby said trailer part can be detachably coupled to said vehicle part, characterized in that the vehicle part comprises a tubular housing bounding a recess, whilst the trailer part comprises a coupling part, which can be partially slid into said recess and which can be locked with respect to said tubular housing, whereby said tubular housing and said coupling part are provided with electric contacts, which can be electrically connected by means of the coupling part which can be slid into said housing.

2. A coupling device according to claim 1, characterized in that said trailer part comprises an attaching part which is pivoted to said coupling part, which attaching part can be attached to a trailer.

3. A coupling device according to claim 2, characterized in that said coupling part and said attaching part are pivotally interconnected by means of a ball, which is secured to one part, and a ring engaging around said ball, which is secured to another part.

4. A coupling device according to claim 2 or 3, characterized in that said coupling part is connected to the attaching part by means of at least one viscous damper.

5. A coupling device according to any one of the preceding claims, characterized in that said tubular housing is provided with a slot provided in a wall thereof, whilst said coupling part is provided with a locking pin, which can be moved by spring force to a locked position within said slot.

6. A coupling device according to any one of the preceding claims, characterized in that said coupling part comprises a locking mechanism, which is provided with an operating slide, which is capable of movement against spring force, with an unlocking slide, which is capable of movement against spring force in a direction parallel to said operating slide, and with a locking pin, which is capable of movement transversely to said operating slide and to said unlocking slide, whilst said housing is provided with a stop co-operating with said unlocking slide, whereby said unlocking slide can be moved against spring force by means of said stop when the coupling part is slid into said housing, as a result of which the locking pin can be moved by spring force to a locked position within said slot, and said operating slide can be moved by spring force to a position in which it locks said locking pin against movement.

7. A coupling device according to claim 6, characterized in that said coupling part is provided with an unlocking mechanism, which comprises a grip which is capable of movement against spring force, by means of which grip said operating slide can be moved against spring force, whereby said locking pin can be moved to an unlocked position by means of said operating slide, after which the unlocking slide can be moved by spring force to a position in which it locks said locking pin against movement.

8. A coupling device according to any one of the preceding claims, characterized in that the recess in said tubular housing is funnel-shaped.

9. A vehicle part suitable for a coupling device according to any one of the preceding claims.

10. A trailer part suitable for a coupling device according to any one of the preceding claims.
